# EUROPEAN PATENT SPECIFICATION

(11) **EP 2 239 429 B1**
(45) Date of publication and mention of the grant of the patent: **27.12.2017**
(21) Application number: 10157391.3
(22) Date of filing: 23.03.2010
(51) Int. Cl.: F01M 5/00, F16N 39/02, F16M 1/04, F28F 1/12, F28F 9/013

(54) **Lubricant oil cooling apparatus for power transmission apparatus**
Schmierölkühlvorrichtung für Leistungsübertragungsvorrichtungen
Appareil de refroidissement d'huile de lubrifiant pour appareil de transmission d'alimentation

(30) Priority: 23.03.2009 JP 2009070135
(43) Date of publication of application: 13.10.2010
(73) Proprietor: Sumitomo Heavy Industries Gearbox Co., Ltd., Kaizuka-shi, Osaka 597-8555 (JP)
(72) Inventor: Kanemitu, Masahiro, Kaizuka-shi, Osako 597-8555 (JP)
(74) Representative: Intès, Didier Gérard André

(56) References cited:
- US-A- 3 330 514
- US-A- 3 910 381
- US-A- 4 174 482
- US-A1- 2002 040 694

## Description

### BACKGROUND OF THE INVENTION

### 1. Field of the Invention

The present invention relates to a lubricant oil cooling apparatus for a power transmission apparatus.

### 2. Description of Related Art

Apparatuses for cooling lubricant oil have been publicly known.

For example, an oil cooling engine apparatus disclosed in Japanese Unexamined Patent Publication No. 2002-147234, which is arranged so that lubricant oil lubricating a slide portions of the engine is cooled and then returns to the slide portion again, is characterized in that, a lubricant oil pump is provided in the engine, the engine and auxiliaries such as a carburetor and a muffler are enclosed by a tubular frame and the engine is supported by this frame, the inside of the frame functions as a path through which the lubricant oil passes, and the lubricant oil air-cooled in the frame circulates around the slide portion as the aforesaid path is connected to the lubricant oil pump. Since the lubricant oil flows on the oil path inside the frame, the heat dissipation area is large because the total length of the frame is long, with the result that the heat dissipation by the frame is effective.

Japanese Unexamined Patent Publication No. 2002-147234 is, however, disadvantageous in that the frame as an oil path must be enlarged and/or elongated if the heat dissipation effect is enhanced.

In consideration of the above, an objective of the present invention is to provide a lubricant oil cooling apparatus which improves the heat dissipation effect without enlarging and/or elongating the heat-dissipating oil path, and increases the thermal rating of a power transmission apparatus.

### SUMMARY OF THE INVENTION

This objective is achieved by an apparatus according to claim 1. In the present invention, a lubricant oil cooling apparatus, for a power transmission apparatus transmitting and outputting power of a motor, cools lubricant oil lubricating the power transmission apparatus and includes: a bed which includes a first supporting member and supports the motor; and a cooling pipe which penetrates the first supporting member while contacting the first supporting member and constitutes a part of a pipe which supplies the lubricant oil to the power transmission apparatus.

According to the arrangement above, the cooling pipe constituting a part of the pipe supplying the lubricant oil to the power transmission apparatus penetrates the first supporting member constituting a part of the bed supporting the motor, while contacting the first supporting member. This allows the lubricant oil flowing in the cooling pipe to dissipate heat not only from the surface of the cooling pipe but also from the first supporting member contacting the cooling pipe. Since, the first supporting member of the bed supporting the motor is utilized for heat dissipation of the lubricant oil, it is possible to improve the heat dissipation effect without enlarging and/or elongating the oil path for heat dissipation, and to improve the thermal rating of the power transmission apparatus.

The lubricant oil cooling apparatus of the present invention is arranged so that the bed includes: a fixing plate which fixes the motor and is supported by the first supporting member in a direction in which the motor is fixed; and a second supporting member which has a surface with which the first supporting member is in contact and supports the fixing plate together with the first supporting member.

According to this arrangement, the bed fixes the motor by the fixing plate and supports, by the first supporting member and the second supporting member, the fixing plate to which the motor is fixed. Furthermore, the second supporting member contacting the cooling pipe also contacts the fixing plate and the second supporting member. This allows the lubricant oil flowing in the cooling pipe to dissipate heat not only from the surface of the cooling pipe and the surface of the first supporting member but also from the fixing plate and the second supporting member contacting the first supporting member, thereby further improving the thermal rating of the power transmission apparatus.

The lubricant oil cooling apparatus of the present invention may be arranged to further include a casing which houses the power transmission apparatus along with the lubricant oil, wherein, the cooling pipe is arranged to be lower than a height position of an oil level of the lubricant oil in the casing.

According to the arrangement above, it is possible to prevent air from entering the cooling pipe even if the casing housing the lubricant oil is inclined, because the cooling pipe is positioned to be lower than the height position of the oil level of the lubricant oil in the casing.

### BRIEF DESCRIPTION OF THE DRAWINGS

Fig. 1 is an elevation of a lubricant oil cooling apparatus.
Fig. 2 is a top view showing the inside of the bed.
Fig. 3 schematically illustrates the lubricant oil cooling apparatus.
Fig. 4 is a top view of the lubricant oil cooling apparatus.
Fig. 5 is a profile of the lubricant oil cooling apparatus.

### DESCRIPTION OF THE PREFERRED EMBODIMENTS

The following will describe a lubricant oil cooling apparatus 1 of an embodiment according to the present invention with reference to figures.

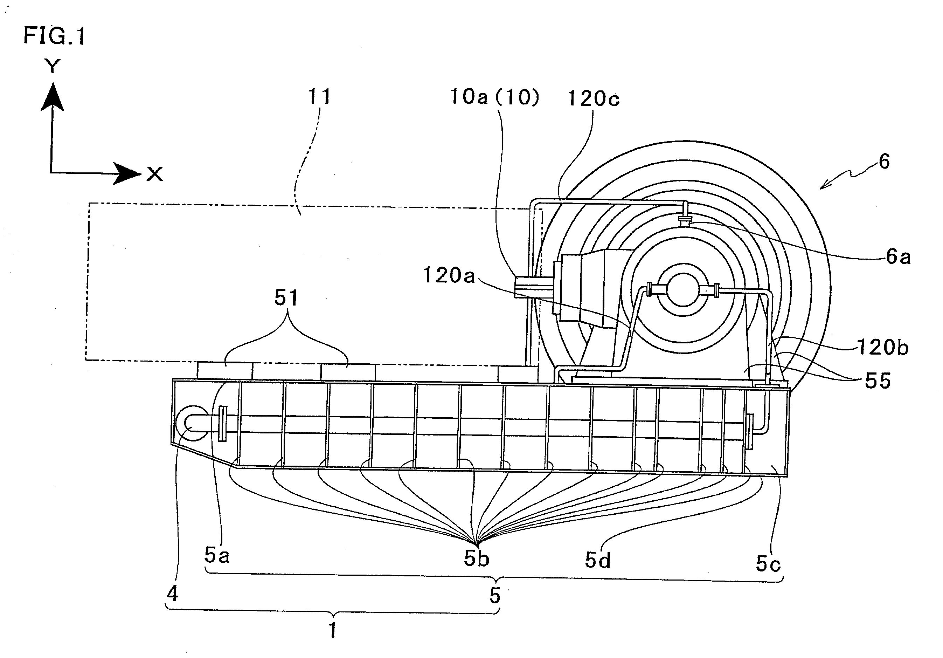

As shown in Fig. 1, the lubricant oil cooling apparatus 1 of the present embodiment is a lubricant oil cooling apparatus which cools lubricant oil for lubricating a power transmission apparatus 10(hereinafter, speed reducer 10) which transmits and outputs the power from the motor 11. This oil cooling apparatus 1 includes a bed 5 including first supporting members 5b and supports a motor 11 and a cooling pipe 4 which penetrates the first supporting members 5b while contacting them and constitutes a part of supply pipes 120 which supply lubricant oil to the speed reducer 10.

### (Mechanical Structure)

The lubricant oil cooling apparatus 1 cools lubricant oil which lubricates a speed reducer 10 used for a bucket wheel excavator for surface mining. Although not illustrated, the bucket wheel excavator has a bucket wheel in which plural buckets are circumferentially provided at predetermined intervals. As the rotating bucket wheel is forced to contact a mining target, ores or the like are successively mined. The ores or the like which have been successively mined are moved by a belt conveyer or the like on a boom. The bucket wheel is rotated by the power of the motor 11 transmitted by the speed reducer 10.

The speed reducer 10 of the present embodiment is housed in a casing 6 while being dipped in the lubricant oil to reach a predetermined height position in the oil. The speed reducer 10 has an input shaft 10a to which the power of the motor 11 is input and an output shaft 10b by which the power is output to the bucket wheel. The speed reducer 10 is housed in the casing 6 so that the input shaft 10a and the output shaft 10b rotatably jut out. The speed reducer 10 is supported by the bucket wheel at the output shaft 10b. The torque to the speed reducer 10 generated because the speed reducer 10 rotates the bucket wheel is countered and restrained by fixing the casing 6 housing the speed reducer 10 to the boom or the like of the belt conveyer.

### (Bed 5)

The above-described motor 11 by which the power is input to the speed reducer 10 is, as shown in Fig. 1, supported by the bed 5. The bed 5 supporting the motor 11 is supported so as to be suspended by the casing 6 housing the speed reducer 10. The bed 5 has a fixing plate 5a, plural first supporting members 5b, two second supporting members 5c, and a substrate 5d.

The fixing plate 5a is a flat plate member to which the motor 11 is fixed, and constitutes the top surface of the bed 5. The fixing plate 5a is long in the direction in which the power of the motor 11 is output. The motor 11 is fixed in such a way as to be placed on protruding fixing portions 51 which are close to one end of the fixing plate 5a in the longitudinal directions. On the other hand, the fixing plate 5a is connected to the casing 6 by a suspending member 55, at the other end in the longitudinal directions. In this way, the casing 6 supports the bed 5 by a suspending manner.

Hereinafter, a longitudinal direction of the fixing plate 5a will be referred to as X direction. A direction which is orthogonal to the X direction and in which the motor 11 is fixed to the fixing plate 5a will be refereed to as Y direction. A direction orthogonal to both the X direction and the Y direction will be referred to as Z direction.

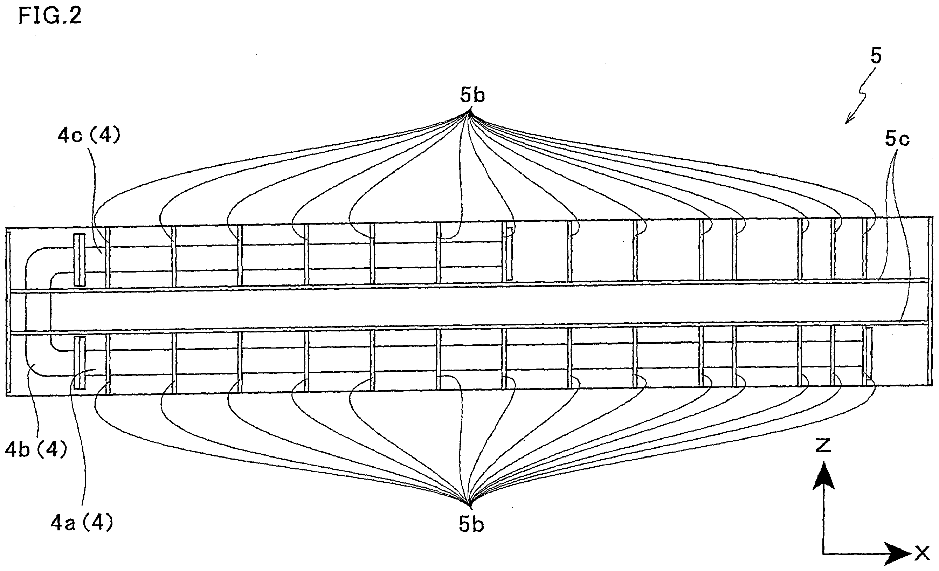

Each of the second supporting members 5c is shaped like a flat plate. Two second supporting members 5c are formed so that they oppose each other and equally distanced from a center line of the fixing plate 5a which line extends in the X direction and equally divides the fixing plate 5a in two in the Z direction. In other words, as shown in Fig. 2, each second supporting member 5c is a plate orthogonal to the Z direction and is long in the X direction.

Each of the first supporting members 5b is shaped like a flat plate. The plural first supporting members 5b are formed such that flat plates which are in parallel to one another and aligned in the Z direction extend in the Z direction from the two second supporting members 5c. At least one of the first supporting member 5b is further provided at its center with a through hole in which the later-described cooling pipe 4 penetrates while contacting the hole.

The substrate 5d is a flat plate with which the edges of the first supporting members 5b and the second supporting members 5c are in contact, and constitutes the bottom surface of the bed 5. This substrate 5d is long in the direction in which the motor 11 outputs power. In other words, the first supporting members 5b and the second supporting members 5c formed on the substrate 5d support the fixing plate 5a in the Y direction (i.e. in the direction in which the motor 11 is fixed).

As such, the bed 5 has the second supporting members 5c through which the cooling pipe 4 allowing the lubricant oil to flow penetrates while contacting the members 5c. With this, the lubricant oil flowing in the cooling pipe 4 dissipates heat not only from the surface of the cooling pipe 4 but also from the first supporting members 5b contacting the cooling pipe 4. In this way, since the first supporting members 5b of the bed 5 supporting the motor 11 are used for dissipating heat of the lubricant oil, the heat dissipation effect is improved without enlarging and/or elongating the oil path for heat dissipation, and the thermal rating of the speed reducer 10 is improved.

In addition to the above, the bed 5 is formed so that each of the second supporting members 5c contacts the substrate 5d at one end in the Y direction, contacts the fixing plate 5a at the other end in the Y direction, and contacts the first supporting members 5b at one end in the Z direction. Therefore, the heat of the lubricant oil flowing in the cooling pipe 4 is dissipated not only from the surface of the cooling pipe 4 and the surfaces of the first supporting members 5b but also from the fixing plate 5a, the second supporting members 5c, and the substrate 5d which are in contact with the first supporting members 5b. This further improves the thermal rating of the speed reducer 10.

It is noted that the contact point between the cooling pipe 4 and each of the first supporting members 5b is welded to facilitate the heat conduction. Also, the contact points of the fixing plate 5a, the plural first supporting members 5b, the two second supporting members 5c, and the substrate 5d are welded to facilitate the heat conduction.

### (Supply Pipes 120)

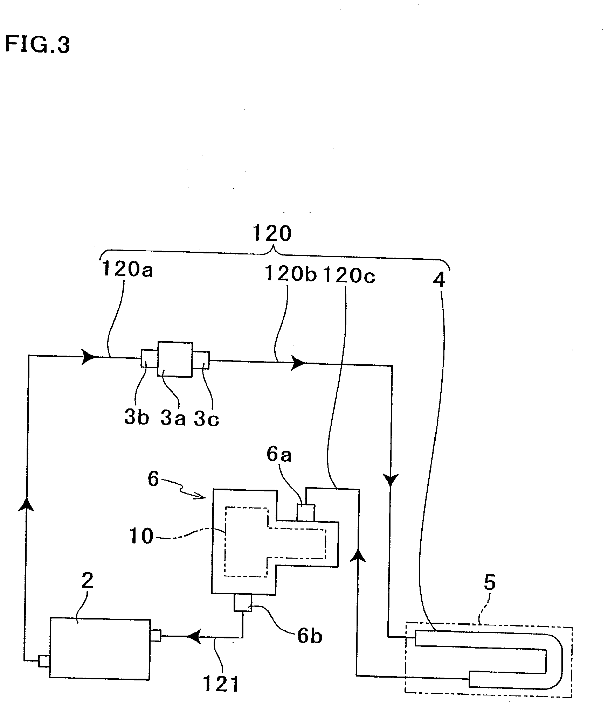

As shown in Fig. 3, the supply pipes 120 of the present embodiment supply, by an oil pump 3, the lubricant oil from an oil tank 2 storing the lubricant oil having lubricated the speed reducer 10 to the casing 6 which houses the speed reducer 10. More specifically, the supply pipes 120 include supply pipes 120a, 120b, and 120c and the cooling pipe 4.

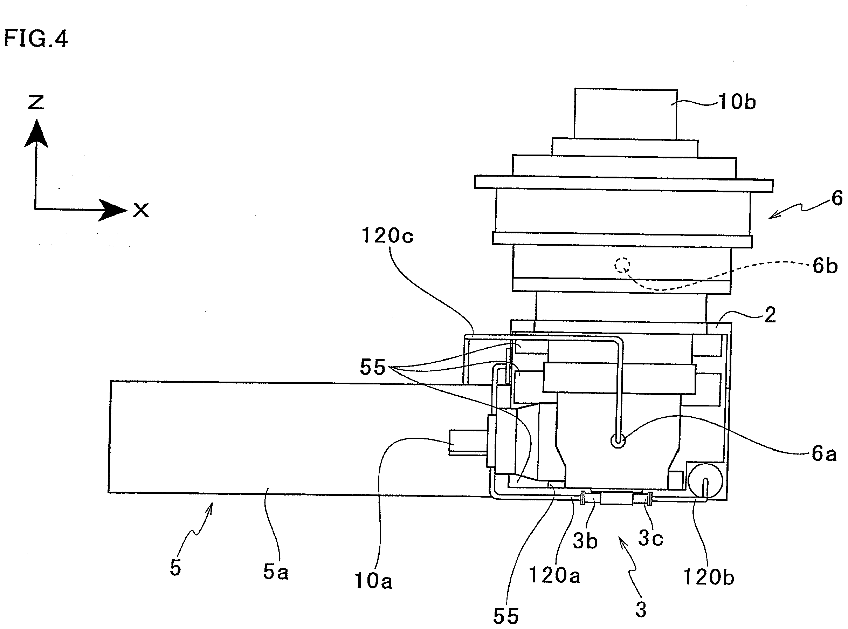

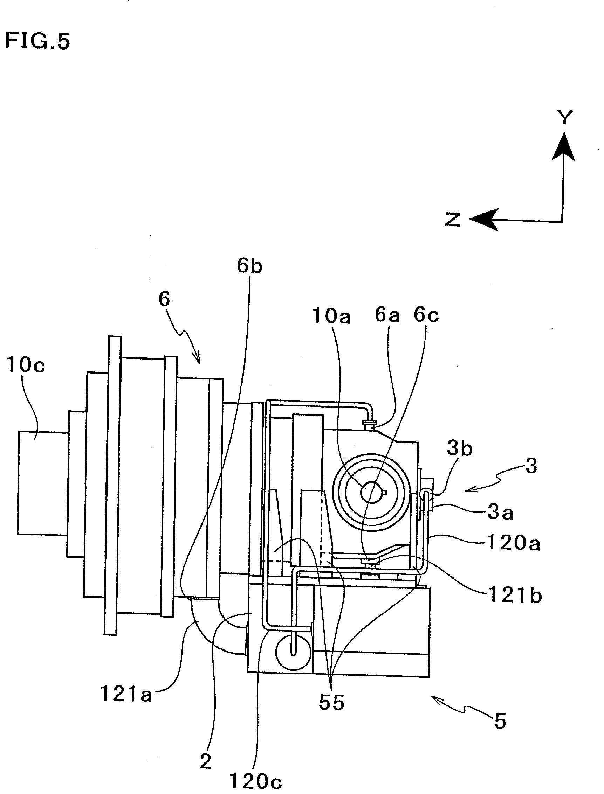

The supply pipe 120a is a tubular member which connects the oil tank 2 with a suction port 3b of the oil pump 3 by which the lubricant oil is sucked. More specifically, one end of the supply pipe 120a is connected to a side face of the oil tank 2 neighboring the bed 5 in the Z direction, the side face extending in the X direction. The supply pipe 120a curvedly connects the oil tank 2 with the suction port 3b of the casing 6 which is above the oil tank 2 in the Y direction (see Fig. 4 and Fig. 5).

The oil pump 3 is connected to the rotation axis of the speed reducer 10, so that the lubricant oil is sucked and discharged in response to the rotation of the rotation axis. Alternatively, the oil pump 3 may be driven by an additionally-provided motor or the like.

The supply pipe 120b is a tubular member connecting an outlet 3c of the oil pump 3, from which the lubricant oil is discharged, with the cooling pipe 4. More specifically, one end of the supply pipe 120b is connected to the outlet 3c. The supply pipe 120b curvedly connects the outlet 3c with an end of the cooling pipe 4 which is below the outlet 3c in the Y direction (see Fig. 1 and Fig. 4). It is noted that the cooling pipe 4 which constitutes a part of the supply pipes 120 will be discussed later.

The supply pipe 120c is a tubular member connecting the cooling pipe 4 with the casing 6. More specifically, one end of the supply pipe 120c is connected to the other end of the cooling pipe 4. The supply pipe 120c is provided from the cooling pipe 4c to a supply port 6a formed in the upper part of the casing 6 in the Y direction (see Fig. 4 and Fig. 5).

### (Cooling Pipe 4)

Now, the cooling pipe 4 constituting a part of the supply pipes 120 will be described. As shown in Fig. 2, the cooling pipe 4 includes cooling pipes 4a, 4b, and 4c and forms a U-shape. The cooling pipe 4 connects the supply pipe 120b with the supply pipe 120c.

The cooling pipe 4a is a straight tubular member and penetrates the through holes of plural first supporting members 5b formed on one end side of the bed 5 in the Z direction, while contacting the holes. The cooling pipe 4a is welded with the first supporting member 5b at the contact point therebetween. The cooling pipe 4a has a flange at is one opening, and this flange is connected to the supply pipe 120b. The cooling pipe 4a has another flange at the other opening. The cooling pipe 4a is connected to the cooling pipe 4b such that the flange is fixed to a flange formed at an opening of the cooling pipe 4b.

The cooling pipe 4b is a tubular member which is U-shaped when viewed in the Y direction, and penetrates the through holes of a pair of second supporting members 5c while contacting the holes. The cooling pipe 4b is welded with the second supporting member 5c at the contact point therebetween. The cooling pipe 4b is connected to the cooling pipe 4c such that a flange formed at the other opening of the pipe 4b is fixed to a flange formed at an opening of the cooling pipe 4c.

The cooling pipe 4c is a straight tubular member, and penetrates the through holes of at least one first supporting member 5b on the other end side of the bed 5 in the Z direction, while contacting the holes. The cooling pipe 4c is welded with the first supporting member 5b at the contact point therebetween. The cooling pipe 4c has a flange at the other opening thereof, and this flange is connected to the supply pipe 120c.

The height position of the cooling pipe 4 will be described. The speed reducer 10 of the present embodiment is used for a bucket wheel excavator as described above. Since the bucket wheel which is rotatably supported by the speed reducer 10 excavates the excavation target, the bucket wheel excavator allows the bucket wheel to incline up to a predetermined angle (15 degrees in the present embodiment) . More specifically, the speed reducer 10 side of the bed 5 in the longitudinal direction is allowed to incline downward.

The cooling pipe 4 is disposed to be lower than the oil level of the lubricant oil in the casing 6 when the speed reducer 10 is maximally inclined. In other words, the cooling pipe 4 is provided vertically below the oil level of the lubricant oil in the casing 6 when the speed reducer 10 is maximally inclined. This arrangement prevents air in the casing 6 from entering the cooling pipe 4 even when the speed reducer 10 is inclined at a predetermined angle due to the incline of the bucket wheel at a predetermined angle.

### (Communication Tube 121)

As shown in Fig. 3, a communication tube 121 is provided to discharge the lubricant oil from the casing 6 which houses the speed reducer 10 to the oil tank 2.

More specifically, the communication tube 121 has a communication tube 121a and a communication tube 121b. As shown in Fig. 5, the communication tube 121a connects, with the oil tank 2, an exhaust port 6b formed in a part of the casing 6 which part is a central part in the Z direction and is a lower part in the Y direction. The communication tube 121a has a larger diameter than the cooling pipe 4. The communication tube 121a is arranged so that the lubricant oil inside the casing 6 moves to the oil tank 2 by its own weight.

The communication tube 121b connects, with the oil tank 2, a connection port 6c which is formed in a part of the casing 6 which part is an edge part in the Z direction and is a lower part in the Y direction. The communication tube 121b causes air in the oil tank 2 to move to the casing 6.

### (Movement)

The following will describe the movement of the lubricant oil regarding the lubricant oil cooling apparatus 1 of the present embodiment.

First, the lubricant oil having lubricated the speed reducer 10 in the casing 6 moves from the exhaust port 6b to the oil tank 2 via the communication tube 121a by its own weight. The air trapped in the oil tank 2 is moved to the casing 6 via the communication tube 121b.

Subsequently, the lubricant oil stored in the oil tank 2 is pumped by the oil pump 3 via the supply pipe 120a. More specifically, the lubricant oil stored in the oil tank 2 is sucked into the suction port 3b via the supply pipe 120a, by the oil pump 3 which is driven by the rotation axis of the speed reducer 10. Thereafter, the lubricant oil pumped by the oil pump 3 is discharged from the outlet 3c by the oil pump 3, and supplied to the cooling pipe 4 of the bed 5 via the supply pipe 120b.

Then the lubricant oil supplied to the cooling pipe 4 passes through the cooling pipes 4a, 4b, and 4c in this order. The lubricant oil flowing in the cooling pipe 4 dissipates heat to the outside via the outer surface of the cooling pipe 4 and the first supporting members 5b, because the cooling pipe 4 penetrates the first supporting members 5b while contacting them.

In addition to the above, since the first supporting members 5b also contact the fixing plate 5a, the second supporting members 5c, and the substrate 5d, the lubricant oil flowing in the cooling pipe 4 dissipates heat also from the fixing plate 5a, the second supporting members 5c, and the substrate 5d via the first supporting members 5b. In other words, the fixing plate 5a, the first supporting members 5b, the second supporting members 5c, and the substrate 5d function not only supporters of the motor 11 but also radiation fins for heat dissipation of the lubricant oil flowing in the cooling pipe 4.

Thereafter, the lubricant oil flowing in the cooling pipe 4 is supplied to the supply port 6a via the supply pipe 120c, as the oil in the cooling pipe 4 is pushed by the lubricant oil discharged from the oil pump 3. In other words, the lubricant oil flowing in the cooling pipe 4 is supplied to the casing 6 via the supply pipe 120c so as to lubricate the speed reducer 10.

### (Outline of Present Embodiment)

A lubricant oil cooling apparatus 1 of the present embodiment is a lubricant oil cooling apparatus for cooling lubricant oil which lubricates a power transmission apparatus 10 (speed reducer 10) which transmits and outputs the power of a motor 11, and includes first supporting members 5b, a bed 5 supporting the motor 11, and a cooling pipe 4 which penetrates the first supporting members 5b while contacting them and constitutes a part of pipes which supplies the lubricant oil to the speed reducer 10.

According to the arrangement above, the cooling pipe 4 constituting a part of the pipes supplying the lubricant oil to the speed reducer 10 penetrates the first supporting members 5b constituting parts of the bed 5 supporting the motor 11 while contacting the members 5b. This allows the lubricant oil flowing in the cooling pipe 4 to dissipate heat not only from the surface of the cooling pipe 4 but also from the first supporting members 5b contacting the cooling pipe 4. Since the first supporting members 5b of the bed 5 supporting the motor 11 are used for dissipating the heat of the lubricant oil, the heat dissipation effect is improved without enlarging and/or elongating the oil path for heat dissipation, and the thermal rating of the power transmission apparatus is improved.

The bed 5 of the lubricant oil cooling apparatus 1 of the present embodiment may be arranged to include: a fixing plate 5a which fixes the motor 11 and is supported by the first supporting members 5b in the direction in which the motor 11 is fixed; and second supporting members 5c each of which has a flat surface with which the first supporting members 5b are in contact and supports the fixing plate 5a together with the first supporting members 5b.

According to the arrangement above, the bed 5 fixes the motor 11 by the fixing plate 5a and supports, by the first supporting members 5b and the second supporting members 5c, the fixing plate 5a which fixes the motor 11. Furthermore, the second supporting members 5c contacting the cooling pipe 4 also contact the fixing plate 5a and the second supporting members 5c. With this, the lubricant oil flowing in the cooling pipe 4 dissipates heat not only from the surface of the cooling pipe 4 and the surfaces of the first supporting members 5b but also from the fixing plate 5a and the second supporting members 5c contacting the first supporting members 5b. This further improves the thermal rating of the speed reducer 10.

The lubricant oil cooling apparatus 1 of the present embodiment further includes a casing 6 which houses the speed reducer 10 along with the lubricant oil, and the cooling pipe 4 is provided to be lower than the height position of the oil level of the lubricant oil in the casing 6.

According to the arrangement above, even when the casing 6 housing the lubricant oil therein is inclined, no air enters into the cooling pipe 4 because this cooling pipe 4 is provided below the height position of the oil level of the lubricant oil in the casing 6.

### (Variations of Present Embodiment)

While the present invention has been described in conjunction with the specific embodiments outlined above, it is evident that many alternatives, modifications and variations will be apparent to those skilled in the art. Accordingly, the preferred embodiment of the invention as set forth above is intended to be illustrative, not limiting. Various changes may be made without departing from the spirit and scope of the invention as defined in the following claims.

In addition to the above, the lubricant oil cooling apparatus 1 of the power transmission apparatus of the present embodiment may alternatively or additionally have the following features.

In the present embodiment, the lubricant oil cooling apparatus 1 is used for bucket wheel excavators: however, the apparatus may be variously used for other purposes, e.g. other excavators such as tunnel boring machines.

In the present embodiment, a power transmission device housed in the casing 6 and lubricated by the lubricant oil is the speed reducer 10: however, the power transmission device may only have a function to change the direction of the rotation axis or may be a device such as a clutch.

In the present embodiment, the cooling pipe 4 is arranged so that all paths are provided in the bed 5: however, the paths of the cooling pipe 4 are not necessarily disposed in this manner as long as at least one of the paths of the cooling pipe 4 is disposed in the bed 5.

In the present embodiment, the motor 11 is supported by the bed 5 and the bed 5 is supported by the casing 6: however, the components are not necessarily supported in this way as long as the bed 5 supports the motor 11. For example, the bed 5 may support both the motor 11 and the casing 6. Alternatively, the bed 5 may be supported by the power transmission apparatus, or the bed may support the power transmission apparatus. (The bed 5 may be inclined or rotatably provided in the air or may be provided on the land.)

The bed 5 is not limited to the arrangement described in the embodiment above and may be differently arranged as long as it has first supporting members 5b through which the cooling pipe 4 penetrates while contacting the members 5b. For example, the substrate 5d is not formed so that the cooling pipe 4 is exposed to the outside air.

The present invention is applicable for any types of lubricant oil cooling apparatuses.

## Claims

1. A lubricant oil cooling apparatus (1) for a power transmission apparatus (10) for transmitting and outputting power of a motor (11), the lubricant oil cooling apparatus (1) being configured to cool lubricant oil for lubricating a power transmission apparatus (10) and comprising a bed (5) which includes a first supporting member (5b) for supporting the motor (11) and a cooling pipe (4),
said apparatus (1) being **characterized in that** :
the bed (5) includes a fixing plate (5a) for fixing the motor (11), said first supporting member (5b) supporting the fixing plate (5a), and a second supporting member (5c) which has a surface with which the first supporting member (5b) is in contact and supports the fixing plate (5a) together with the first supporting member (5b); and
said cooling pipe (4) penetrates the first and second supporting members (5b,5c) while contacting the first and second supporting members (5b,5c) and constitutes a part of a pipe (120) adapted for supplying the lubricant oil to the power transmission apparatus (10); and **in that** the apparatus further comprises another second supporting member and another first supporting member contacting the other second supporting member wherein the cooling pipe has: a part which penetrates the first supporting member in contact with the second supporting member; a part penetrating the second supporting member and the other second supporting member; and a part penetrating the other first supporting member in contact with the other second supporting member.

2. The lubricant oil cooling apparatus (1) according to claim 1, **characterized in that** further comprises a casing (6) for housing the power transmission apparatus (10) along with the lubricant oil, wherein,
the power transmission apparatus (10) is configured to be used for driving a bucket wheel excavator, and
the cooling pipe (4) is arranged to be lower than a height position of an oil level of the lubricant oil in the casing (6), even when the power transmission apparatus (10) is maximally inclined.

## Patentansprüche

1. Schmierölkühlvorrichtung (1) für eine Leistungsübertragungsvorrichtung (10) zum Übertragen und Abgeben von Leistung eines Motors (11), wobei die Schmierölkühlvorrichtung (1) dazu ausgebildet ist, Schmieröl zum Schmieren einer Leistungsübertragungsvorrichtung (10) zu kühlen, und ein Bett (5), das ein erstes Tragglied (5b) zum Tragen des Motors (11) umfasst, und ein Kühlrohr (4) umfasst,
wobei die Vorrichtung (1) **dadurch gekennzeichnet ist, dass**:
das Bett (5) eine Befestigungsplatte (5a) zum Befestigen des Motors (11) umfasst, wobei das erste Tragglied (5b) die Befestigungsplatte (5a) trägt, und ein zweites Tragglied (5c) umfasst, das eine Oberfläche, mit der das erste Tragglied (5b) in Kontakt steht, aufweist und das gemeinsam mit dem ersten Tragglied (5b) die Befestigungsplatte (5a) trägt, und
das Kühlrohr (4) das erste und das zweite Tragglied (5b, 5c) durchdringt, wobei es mit dem ersten und dem zweiten Tragglied (5b, 5c) in Kontakt steht, und einen Teil eines Rohres (120) bildet, das dazu ausgebildet ist, das Schmieröl der Leistungsübertragungsvorrichtung (10) zuzuführen, und dadurch, dass die Vorrichtung ferner umfasst:
ein anderes zweites Tragglied und ein anderes erstes Tragglied, das mit dem anderen zweiten Tragglied in Kontakt steht, wobei das Kühlrohr aufweist: einen Teil, der das erste Tragglied, das mit zweiten Tragglied in Kontakt steht, durchdringt, einen Teil, der das zweite Tragglied und das andere zweite Tragglied durchdringt, und einen Teil, der das andere erste Tragglied, das mit dem anderen zweiten Tragglied in Kontakt steht, durchdringt.

2. Schmierölkühlvorrichtung (1) nach Anspruch 1, **dadurch gekennzeichnet, dass** sie ferner ein Gehäuse (6) zum Aufnehmen der Leistungsübertragungsvorrichtung (10) gemeinsam mit dem Schmieröl umfasst, wobei
die Leistungsübertragungsvorrichtung (10) dazu ausgebildet ist, zum Antreiben eines Schaufelradbaggers verwendet zu werden, und
das Kühlrohr (4) derart angeordnet ist, dass es tiefer als eine Höhenposition eines Ölpegels des Schmieröls in dem Gehäuse (6) ist, selbst wenn die Leistungsübertragungsvorrichtung (10) maximal geneigt ist.

## Revendications

1. Appareil de refroidissement d'huile de lubrification (1) pour un appareil de transmission de puissance (10) pour transmettre et restituer la puissance d'un moteur (11), l'appareil de refroidissement d'huile de lubrification (1) étant configuré pour refroidir l'huile de lubrification afin de lubrifier un appareil de transmission de puissance (10) et comprenant un lit (5) qui comprend un premier élément de support (5b) pour supporter le moteur (11) et un tuyau de refroidissement (4),
ledit appareil (1) étant **caractérisé en ce que** :
le lit (5) comprend une plaque de fixation (5a) pour fixer le moteur (11), ledit premier élément de support (5b) supportant la plaque de fixation (5a) et un second élément de support (5c) qui a une surface avec laquelle le premier élément de support (5b) est en contact et supporte la plaque de fixation (5a) conjointement avec le premier élément de support (5b) ; et
ledit tuyau de refroidissement (4) pénètre dans les premier et second éléments de support (5b, 5c) tout en étant en contact avec les premier et second éléments de support (5b, 5c) et constitue une partie d'un tuyau (120) adapté pour amener l'huile de lubrification à l'appareil de transmission de puissance (10) ; et
**en ce que** l'appareil comprend en outre :
un autre second élément de support et un autre premier élément de support en contact avec l'autre second élément de support, dans lequel le tuyau de refroidissement a : une partie qui pénètre dans le premier élément de support en contact avec le second élément de support ; une partie pénétrant dans le second élément de support et l'autre second élément de support ; et une partie pénétrant dans l'autre premier élément de support en contact avec l'autre second élément de support.

2. Appareil de refroidissement d'huile de lubrification (1) selon la revendication 1, **caractérisé en ce qu'**il comprend en outre un boîtier (6) pour loger l'appareil de transmission de puissance (10) conjointement avec l'huile de lubrification, dans lequel :
l'appareil de transmission de puissance (10) est configuré pour être utilisé afin d'entraîner une excavatrice à roues à godet, et
le tuyau de refroidissement (4) est agencé pour être plus bas qu'une position de hauteur d'un niveau d'huile de l'huile de lubrification dans le boîtier (6), même lorsque l'appareil de transmission de puissance (10) est incliné au maximum.
